# EUROPEAN PATENT APPLICATION

(11) **EP 4 468 483 A1**
(43) Date of publication of application: **27.11.2024**
(21) Application number: 23175156.1
(22) Date of filing: 24.05.2023
(51) Int. Cl.: H01M 50/264, H01M 50/204, H01M 50/209

(54) **A COUPLING ASSEMBLY, AN ENERGY STORAGE SYSTEM, A VEHICLE, AND A METHOD**

(71) Applicant: VOLVO TRUCK CORPORATION, 405 08 Göteborg (SE)
(72) Inventor: Arnesson, Simon, 475 32 Öckerö (SE); Rout, Dhirendra, 422 54 Göteborg (IN)
(74) Representative: Valea AB

(57) **Abstract**

A coupling assembly (1) for coupling two battery modules (2, 3) of an energy storage system (4), wherein each battery module is configured to comprise a plurality of electrochemical battery cells, and wherein the coupling assembly (1) extends in a longitudinal direction (L), a width direction (W) and a vertical direction (V), the coupling assembly (1) comprising a first panel member (10) and a second panel member (12). The disclosure also relates to an energy storage system (4), a vehicle (5), and to a method for coupling two battery modules (2, 3) by use of a coupling assembly (1).

## Description

### TECHNICAL FIELD

The disclosure relates generally to energy storage systems. In particular aspects, the disclosure relates to a coupling assembly for coupling two battery modules of an energy storage system, an energy storage system, a vehicle, and a method for coupling two battery modules. The disclosure can be applied to heavy-duty vehicles, such as trucks, buses, and construction equipment, among other vehicle types. Although the disclosure may be described with respect to a particular vehicle, the disclosure is not restricted to any particular vehicle. The disclosure can also be applied to stationary machinery.

### BACKGROUND

An energy storage system which may be used for powering electric traction motors for a vehicle is typically large and heavy. The energy storage system comprises a plurality of electrically connected electrochemical battery cells. The battery cells may be arranged in a plurality of battery modules, and the battery modules may be arranged in a housing of the battery pack.

There is a strive to develop improved technology relating to energy storage systems, for example energy storage systems for vehicles, such as technology which is cost-effective, beneficial for manufacturing, robust, and/or space saving.

### SUMMARY

According to a first aspect of the disclosure, there is provided a coupling assembly for coupling two battery modules of an energy storage system, wherein each battery module is configured to comprise a plurality of electrochemical battery cells, and wherein the coupling assembly extends in a longitudinal direction, a width direction and a vertical direction, the coupling assembly comprising:
- a first panel member configured to be associated with a first one of the two battery modules, wherein the first panel member comprises a first panel member first side extending in the longitudinal direction and the vertical direction,
- a second panel member configured to be associated with a second one of the two battery modules, wherein the second panel member comprises a second panel member first side extending in the longitudinal direction and the vertical direction,
- a coupling interface for coupling the first and second panel members to each other,

wherein the first and second panel members are configured to be coupled to each other via the coupling interface such that, when the first and second panel members are coupled, the first panel member first side is facing the second panel member first side,
wherein the coupling interface comprises an upper coupling interface and a lower coupling interface, as seen in the vertical direction, wherein the upper and lower coupling interfaces are offset from each other in the vertical direction, and
wherein a first one of the upper and lower coupling interfaces is configured such that a relative movement of the first and second panel members in the vertical direction is required to couple the first and second panel members. The first aspect of the disclosure may seek to provide an improved coupling between two battery modules which is robust, reliable, and also beneficial for manufacturing. A technical benefit may include that a reliable and robust coupling can be achieved in a compact space between two battery modules. The coupling assembly may also imply facilitated manufacturing, e.g., allowing two battery modules to be reliably coupled by using few and/or less complicated manufacturing procedures.

By a relative movement of the first and second panel members in the vertical direction being required means herein that a relative movement of the first and second panel members in the vertical direction must be performed for coupling the first and second panel members to each other.

Optionally in some examples, including in at least one preferred example, the first one of the upper and lower coupling interfaces comprises a first connection member attached to the first panel member and a second connection member attached to the second panel member, wherein the first connection member and the second connection member are configured to mechanically interconnect. A technical benefit may include a reliable and robust coupling, e.g., preventing movement in the width direction when coupled.

Optionally in some examples, including in at least one preferred example, the first connection member comprises a first wall segment extending in the longitudinal direction and the vertical direction and the second connection member comprises a second wall segment extending in the longitudinal direction and the vertical direction, wherein the first wall segment is configured to mesh with the second wall segment when the first and second panel members are coupled such that the first and second panel members are prevented from being disconnected from each other in the width direction. A technical benefit may include a reliable and robust coupling, preventing relative movement in the width direction.

Optionally in some examples, including in at least one preferred example, the first connection member comprises a plurality of respective first wall segments and the second connection member comprises a plurality of respective second wall segments. A technical benefit may include a reliable and robust coupling, preventing relative movement in the width direction.

Optionally in some examples, including in at least one preferred example, the plurality of respective first wall segments are offset from each other in the width direction and the plurality of respective second wall segments are offset from each other in the width direction. A technical benefit may include a reliable and robust coupling. This may also imply that a larger space for, e.g., accommodating a bonding adhesive, may be achieved.

Optionally in some examples, including in at least one preferred example, the first connection member and/or the second connection member comprises a reservoir for receiving an adhesive for bonding the first connection member to the second connection member. A technical benefit may include a further reliable and robust coupling.

Optionally in some examples, including in at least one preferred example, a second one of the upper and lower coupling interfaces comprises a third connection member attached to the first panel member and a fourth connection member attached to the second panel member, wherein the third and fourth connection members are configured to be coupled to each other by use of a fastener, such as a rivet or a screw. A technical benefit may include a further reliable and robust coupling. This may also imply a facilitated manufacturing procedure, requiring few fasteners for reliably coupling two battery modules. This may also imply a reduced risk of relative movement in the vertical direction between two coupled battery modules.

Optionally in some examples, including in at least one preferred example, the third and fourth connection members comprise a respective opening for receiving the fastener, wherein the openings are configured such that the fastener is insertable through the third and fourth connection members in a direction which substantially extends along the vertical direction. A technical benefit may include that it may be easier to insert the fastener by a tool. This may also imply a compact coupling assembly.

Optionally in some examples, including in at least one preferred example, at least one of the first and second panel members is an extruded profile with an extrusion direction corresponding to the longitudinal direction. A technical benefit may include that a cost-effective coupling assembly is achieved.

Optionally in some examples, including in at least one preferred example, the first one of the upper and lower coupling interfaces is the upper coupling interface. A technical benefit may include a facilitated manufacturing procedure, e.g., easier for a mounting tool and/or a user reaching the first one of the upper and lower coupling interfaces.

Optionally in some examples, including in at least one preferred example, the first panel member comprises a first panel member second side which is opposite to the first panel member first side, wherein the first panel member second side comprises at least one support portion configured to hold the first one of the two battery modules. A technical benefit may include a compact configuration in which the first panel member has at least two functions.

Optionally in some examples, including in at least one preferred example, the second panel member comprises a second panel member second side which is opposite to the second panel member first side, wherein the second panel member second side comprises at least one support portion configured to hold the second one of the two battery modules. A technical benefit may include a compact configuration in which the second panel member has at least two functions.

According to a second aspect of the disclosure, there is provided an energy storage system comprising two battery modules and a coupling assembly according to any one of the examples of the first aspect of the disclosure for coupling the two battery modules. The second aspect of the disclosure may seek to provide an improved coupling between two battery modules which is robust, reliable, and also beneficial for manufacturing. A technical benefit may include that a reliable and robust coupling can be achieved in a compact space between two battery modules of the energy storage system. The coupling assembly of the energy storage system may also imply facilitated manufacturing, e.g., allowing two battery modules of the energy storage system to be reliably coupled by using few and/or less complicated manufacturing procedures.

According to a third aspect of the disclosure, there is provided a vehicle comprising an energy storage system according to the second aspect of the disclosure.

According to a fourth aspect of the disclosure, there is provided a method for coupling two battery modules by use of a coupling assembly according to any one of the examples of the first aspect of the disclosure, the method comprising:
- coupling the first and second panel members to each other via the coupling interface such that, when the first and second panel members are coupled, the first panel member first side is facing the second panel member first side, wherein coupling the first and second panel members comprises coupling the first one of the upper and lower coupling interfaces by moving the first and second panel members relative to one another in the vertical direction until the first one of the upper and lower coupling interfaces is coupled. The fourth aspect of the disclosure may seek to provide an improved coupling procedure for two battery modules, which also provide a reliable and robust coupling. A technical benefit may include that a reliable and robust coupling can be achieved in a cost-effective manner.

Optionally in some examples, including in at least one preferred example, the method further comprises applying an adhesive to the first one of the upper and lower coupling interfaces before coupling the first one of the upper and lower coupling interfaces.

Optionally in some examples, including in at least one preferred example, applying the adhesive comprises applying the adhesive into a reservoir of the first connection member and/or the second connection member.

Optionally in some examples, including in at least one preferred example, and when the coupling assembly comprises a fastener as disclosed herein, the method further comprises inserting the fastener through the third and fourth connection members.

Optionally in some examples, including in at least one preferred example, the method further comprises inserting a plurality of fasteners through respective openings of the third and fourth connection members, wherein the respective openings are arranged along the longitudinal direction of the coupling assembly.

Optionally in some examples, including in at least one preferred example, inserting the fastener through the third and fourth connection members comprises inserting the fastener through the third and fourth connection members in a direction which substantially extends along the vertical direction.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2a** is an exemplary coupling assembly in a perspective view according to an example.
**FIG. 2b** is an exemplary coupling assembly and an exemplary portion of an energy storage system in a perspective view according to an example.
**FIG. 3** is an exemplary energy storage system in a perspective view according to an example.
**FIG. 4** is an exemplary flowchart of a method according to an example.

The drawings are not necessarily drawn to scale. It shall also be noted that some details in the drawings may be exaggerated in order to better describe and illustrate the particular example. Like reference characters refer to like elements throughout the description, unless expressed otherwise. In some of the drawings some of the reference characters may have been omitted for the sake of clarity.

### DETAILED DESCRIPTION

The detailed description set forth below provides information and examples of the disclosed technology with sufficient detail to enable those skilled in the art to practice the disclosure.

The present disclosure may seek to provide an improved coupling between two battery modules of an energy storage system. For example, an aim of the present disclosure may be to provide a robust and reliable coupling assembly which also is beneficial for manufacturing. A technical benefit may include that a reliable and robust coupling can be achieved in a compact space between two battery modules. The coupling assembly may also imply facilitated manufacturing, e.g., allowing two battery modules to be reliably coupled by using few and/or less complicated manufacturing procedures. Accordingly, an aim of the present disclosure may be to provide a coupling assembly for coupling two battery modules of an energy storage system which at least partly alleviates one or more drawbacks of the prior art. Other aims of the present disclosure may be to provide an energy storage system, a vehicle, and/or a method for coupling two battery modules, which at least partly alleviate one or more drawbacks of the prior art.

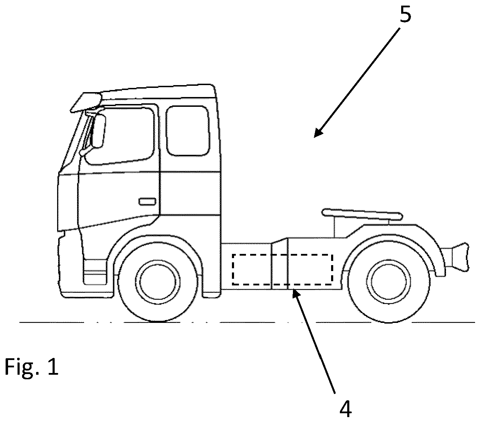

**FIG. 1** is an exemplary vehicle 5 shown in a side view according to an example. The vehicle 5 is a truck for towing one or more trailers (not shown). It shall however be understood that the vehicle may be any other type of vehicle, such as another type of truck, a bus, a passenger car, and construction equipment, such as an excavator, a wheel loader, etc. The vehicle 5 may be driven by a user (not shown) and/or be at least partly automatically driven, i.e., it may be a vehicle comprising autonomous driving capabilities. The vehicle 5 comprises an energy storage system 4 (indicated by a box with dashed lines). The energy storage system 4 is typically used for providing electric power to one or more electric motors (not shown) which are arranged to generate propulsion force for driving the vehicle 5. Accordingly, the vehicle 5 is typically a fully electric vehicle or a hybrid vehicle.

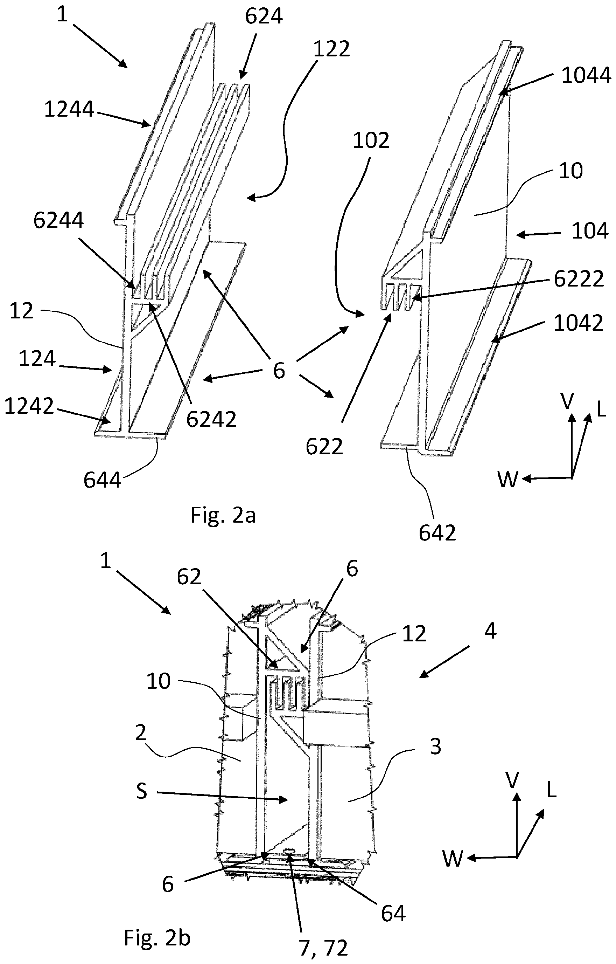

**FIG. 2a** depicts an example of a coupling assembly 1 in a perspective view. The coupling assembly 1 is used for mechanically coupling two battery modules 2, 3 of an energy storage system 4. The energy storage system 4 may for example be the energy storage system 4 shown in FIG. 1. In other examples, the energy storage system 4 may be used for stationary machinery, and/or as a stationary energy source for providing electric power to any electrical consumer. The energy storage system 4 may be a high voltage energy source, such as with a voltage level of at least 200 volts (V), such as 400 V or more. **FIG. 2b** shows an example of the coupling assembly 1 when coupled, i.e., when mechanically coupling two battery modules 2, 3 of the energy storage system 4 to each other. Accordingly, FIG. 2b also shows a portion of an energy storage system 4. Each battery module 2, 3 is configured to comprise a plurality of electrochemical battery cells (not explicitly shown). For example, the electrochemical battery cells may be of lithium-ion type. The battery modules 2, 3 may comprise electrochemical battery cells which are stacked together.

With reference to e.g., FIGS. 2a and 2b, the coupling assembly 1 extends in a longitudinal direction L, a width direction W and a vertical direction V. The directions may correspond to a Cartesian coordinate system. The coupling assembly 1 comprises:
- a first panel member 10 configured to be associated with a first one 2 of the two battery modules, wherein the first panel member 10 comprises a first panel member first side 102 extending in the longitudinal direction L and the vertical direction V,
- a second panel member 12 configured to be associated with a second one 3 of the two battery modules, wherein the second panel member 12 comprises a second panel member first side 122 extending in the longitudinal direction L and the vertical direction V, and
- a coupling interface 6 for coupling the first and second panel members 10, 12 to each other.

The first and second panel members 10, 12 are configured to be coupled to each other via the coupling interface 6 such that, when the first and second panel members 10, 12 are coupled, the first panel member first side 102 is facing the second panel member first side 122.

The coupling interface 6 comprises an upper coupling interface 62 and a lower coupling interface 64, as seen in the vertical direction V. The upper and lower coupling interfaces 62, 64 are offset from each other in the vertical direction V.

A first one of the upper and lower coupling interfaces, in the shown example the upper coupling interface 62, is configured such that a relative movement of the first and second panel members 10, 12 in the vertical direction V is required to couple the first and second panel members 10, 12. In the shown example, a relative movement of the first and second panel members 10, 12 in the vertical direction V must be performed for coupling the first and second panel members 10, 12.

As further shown in e.g., FIGS. 2a and 2b, the first one of the upper and lower coupling interfaces 62 may comprise a first connection member 622 attached to the first panel member 10 and a second connection member 624 attached to the second panel member 12, wherein the first connection member 622 and the second connection member 624 are configured to mechanically interconnect.

The first connection member 622 may as shown comprise a first wall segment 6222 extending in the longitudinal direction L and the vertical direction V and the second connection member 624 may as shown comprise a second wall segment 6242 extending in the longitudinal direction L and the vertical direction V. As further shown in FIG. 2b, the first wall segment 6222 may be configured to mesh with the second wall segment 6242 when the first and second panel members 10, 12 are coupled such that the first and second panel members 10, 12 are prevented from being disconnected from each other in the width direction W.

As further shown, the first connection member 622 may comprise a plurality of respective first wall segments 6222 and the second connection member 624 may comprise a plurality of respective second wall segments 6242. The plurality of respective first wall segments 6222 may as shown be offset from each other in the width direction W and the plurality of respective second wall segments 6242 may also be offset from each other in the width direction W. The wall segments 6222, 6242 are configured to mesh with each other when the first and second panel members 10, 12 are coupled such that the first and second panel members 10, 12 are prevented from being disconnected from each other in the width direction W. The wall segments 6222, 6242 may be arranged such that there is a gap between them in the width direction W. Thereby, the gap(s) may handle tolerance variations of the wall segments 6222, 6242. This may imply facilitated and more cost-effective manufacturing.

The first connection member 622 and/or the second connection member 624 may as shown comprise a reservoir 6244 for receiving an adhesive for bonding the first connection member 622 to the second connection member 624. In the shown example, the reservoir 6244 is provided on the second connection member 624.

As further shown, a second one of the upper and lower coupling interfaces, in the shown example the lower coupling interface 64, may comprise a third connection member 642 attached to the first panel member 10 and a fourth connection member 644 attached to the second panel member 12, wherein the third and fourth connection members 642, 644 are configured to be coupled to each other by use of a fastener 7, such as a rivet or a screw. The third and fourth connection members 642, 644 may as shown be overlapping panel members with an extension in the width direction W and the longitudinal direction L.

The third and fourth connection members 642, 644 may as shown comprise a respective opening 72 for receiving the fastener 7, wherein the openings 72 are configured such that the fastener 7 is insertable through the third and fourth connection members 642, 644 in a direction which substantially extends along the vertical direction V. As shown, by the configuration of the coupling assembly 1, a space S may be formed in-between the first and second panel members 10, 12 when coupled, e.g., allowing a tool to be inserted therein for attaching the fastener 7. The space S may also be used for preventing or reducing heat transfer between the battery modules 2, 3.

At least one of the first and second panel members 10, 12 may be an extruded profile with an extrusion direction corresponding to the longitudinal direction L. For example, the first and second panel members 10, 12 may be made of metal, such as aluminum, a polymer or a fiber reinforced polymer.

As further shown, the first panel member 10 may comprise a first panel member second side 104 which is opposite to the first panel member first side 102, wherein the first panel member second side 104 comprises at least one support portion 1042 configured to hold the first one 2 of the two battery modules. In the shown example, the at least one support portion 1042 is a panel member with an extension in the width direction W and the longitudinal direction L, forming a seat surface for the first one 2 of the two battery modules. As further shown, the first panel member second side 104 may comprise at least one additional support portion 1044 configured to prevent the first one 2 of the two battery modules from moving in an upward direction along the vertical direction V.

In a similar vein, the second panel member 12 may comprise a second panel member second side 124 which is opposite to the second panel member first side 122, wherein the second panel member second side 124 comprises at least one support portion 1242 configured to hold the second one 3 of the two battery modules. In the shown example, the at least one support portion 1242 is a panel member with an extension in the width direction W and the longitudinal direction L, forming a seat surface for the second one 3 of the two battery modules. As further shown, the second panel member second side 124 may comprise at least one additional support portion 1244 configured to prevent the second one 3 of the two battery modules from moving in an upward direction along the vertical direction V.

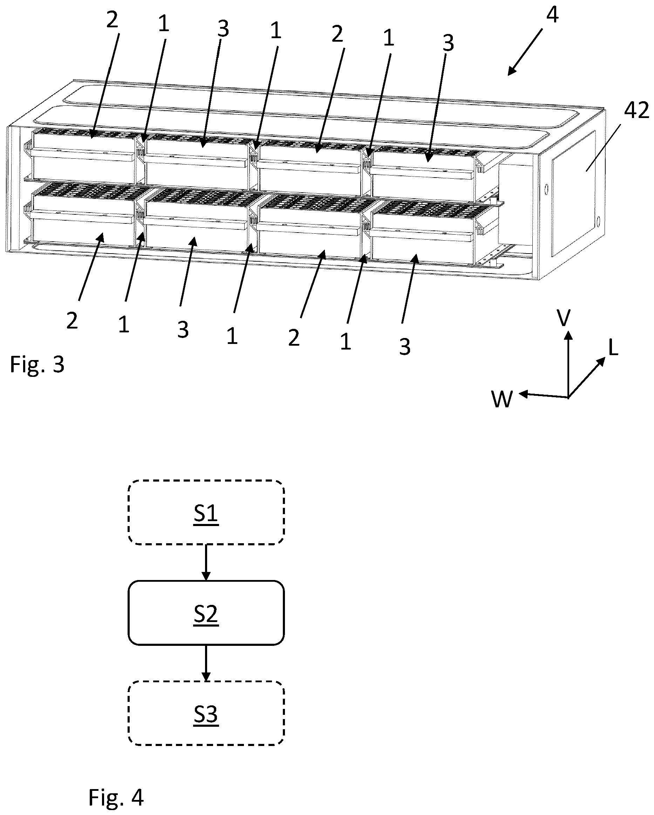

With reference to **FIG. 3****,** an example of an energy storage system 4 is shown in perspective view. The energy storage system 4 comprises two battery modules 2, 3 and a coupling assembly 1 according to any one of the examples of the first aspect of the disclosure for coupling the two battery modules 2, 3. More specifically, in the shown example, the energy storage system 4 comprises a plurality of coupling assemblies 1. Each coupling assembly 1 is configured to couple two battery modules 2, 3 to each other. The battery modules with reference 2 may be identical, and the battery modules with reference 3 may be identical. In the shown example, the energy storage system 4 comprises two levels of battery modules 2, 3, one level arranged on top of another level. Each level comprises a row of battery modules 2, 3 arranged one after the other along the width direction W. The directions L, W and V in FIG. 3 correspond to the directions shown in FIGS. 2a and 2b. It shall be understood that the energy storage system 4 may comprise only one such level, or more than two levels, depending on specific requirements for the intended use of the energy storage system 4. The energy storage system 4 comprises a housing 42 configured to store the battery modules 2, 3.

With reference to **FIG. 4****,** a flowchart of a method according to an example of the disclosure is shown. Boxes with dashed lines indicate optional steps.

The method is intended for coupling two battery modules 2, 3 by use of a coupling assembly 1 as disclosed herein.

The method comprises:
S2: coupling the first and second panel members 10, 12 to each other via the coupling interface 6 such that, when the first and second panel members 10, 12 are coupled, the first panel member first side 102 is facing the second panel member first side 122, wherein coupling the first and second panel members 10, 12 comprises coupling the first one of the upper and lower coupling interfaces 62 by moving the first and second panel members 10, 12 relative to one another in the vertical direction V until the first one of the upper and lower coupling interfaces 62 is coupled.

The method may further comprise:
S1: applying an adhesive to the first one of the upper and lower coupling interfaces 62 before coupling the first one of the upper and lower coupling interfaces 62.

The method may further comprise:
S3: inserting the fastener 7 through a respective opening 72 of the third and fourth connection members 642, 644. Applying the adhesive may comprise applying the adhesive into the reservoir 6244 of the first connection member 624 and/or the second connection member.

The method may further comprise inserting a plurality of fasteners 7 through respective openings 72 of the third and fourth connection members 642, 644, wherein the respective openings 72 are arranged along the longitudinal direction L of the coupling assembly 1. This step may be part of S3 in FIG. 4.

Inserting the fastener 7 through a respective opening 72 of the third and fourth connection members 642, 644 may comprise inserting the fastener 7 through the third and fourth connection members 642, 644 in a direction which substantially extends along the vertical direction V. In an alternative example, the respective opening 72 is made when inserting the fastener into the third and fourth connection members 642, 644.

The battery modules 2, 3, may be inserted into the housing 42 one by one, i.e., the actual coupling therebetween may be performed inside the housing 42. Alternatively, at least two coupled battery modules 2, 3, may be inserted into the housing 42 during assembly of the energy storage system 4, i.e., the actual coupling between at least two battery modules may be performed outside the housing 42.

In the following, possible features and feature combinations of the disclosure are presented as a list of examples.

Example 1: A coupling assembly (1) for coupling two battery modules (2, 3) of an energy storage system (4), wherein each battery module is configured to comprise a plurality of electrochemical battery cells, and wherein the coupling assembly (1) extends in a longitudinal direction (L), a width direction (W) and a vertical direction (V), the coupling assembly (1) comprising:
- a first panel member (10) configured to be associated with a first one of the two battery modules (2), wherein the first panel member (10) comprises a first panel member first side (102) extending in the longitudinal direction (L) and the vertical direction (V),
- a second panel member (12) configured to be associated with a second one of the two battery modules (3), wherein the second panel member (12) comprises a second panel member first side (122) extending in the longitudinal direction (L) and the vertical direction (V),
- a coupling interface (6) for coupling the first and second panel members (10, 12) to each other,

wherein the first and second panel members (10, 12) are configured to be coupled to each other via the coupling interface (6) such that, when the first and second panel members (10, 12) are coupled, the first panel member first side (102) is facing the second panel member first side (122),
wherein the coupling interface (6) comprises an upper coupling interface (62) and a lower coupling interface (64), as seen in the vertical direction (V), wherein the upper and lower coupling interfaces (62, 64) are offset from each other in the vertical direction (V), and
wherein a first one of the upper and lower coupling interfaces (62) is configured such that a relative movement of the first and second panel members (10, 12) in the vertical direction (V) is required to couple the first and second panel members (10, 12).

Example 2: The coupling assembly (1) according to Example 1, wherein the first one of the upper and lower coupling interfaces (62) comprises a first connection member (622) attached to the first panel member (10) and a second connection member (624) attached to the second panel member (12), wherein the first connection member (622) and the second connection member (624) are configured to mechanically interconnect.

Example 3: The coupling assembly (1) according to Example 2, wherein the first connection member (622) comprises a first wall segment (6222) extending in the longitudinal direction (L) and the vertical direction (V) and the second connection member (624) comprises a second wall segment (6242) extending in the longitudinal direction (L) and the vertical direction (V), wherein the first wall segment (6222) is configured to mesh with the second wall segment (6242) when the first and second panel members (10, 12) are coupled such that the first and second panel members (10, 12) are prevented from being disconnected from each other in the width direction (W).

Example 4: The coupling assembly (1) according to Example 3, wherein the first connection member (622) comprises a plurality of respective first wall segments (6222) and the second connection member (624) comprises a plurality of respective second wall segments (6242).

Example 5: The coupling assembly (1) according to Example 4, wherein the plurality of respective first wall segments (6222) are offset from each other in the width direction (W) and the plurality of respective second wall segments (6242) are offset from each other in the width direction (W).

Example 6: The coupling assembly (1) according to any one of Examples 2-5, wherein the first connection member (622) and/or the second connection member (624) comprises a reservoir (6244) for receiving an adhesive for bonding the first connection member (622) to the second connection member (624).

Example 7: The coupling assembly (1) according to any one of the preceding Examples, wherein a second one of the upper and lower coupling interfaces (64) comprises a third connection member (642) attached to the first panel member (10) and a fourth connection member (644) attached to the second panel member (12), wherein the third and fourth connection members (642, 644) are configured to be coupled to each other by use of a fastener (7), such as a rivet or a screw.

Example 8: The coupling assembly (1) according to Example 7, wherein the third and fourth connection members (642, 644) comprise a respective opening (72) for receiving the fastener, wherein the openings are configured such that the fastener (7) is insertable through the third and fourth connection members (642, 644) in a direction which substantially extends along the vertical direction (V).

Example 9: The coupling assembly (1) according to any one of the preceding Examples, wherein at least one of the first and second panel members (10, 12) is an extruded profile with an extrusion direction corresponding to the longitudinal direction (L).

Example 10: The coupling assembly (1) according to any one of the preceding Examples, wherein the first one of the upper and lower coupling interfaces (62) is the upper coupling interface.

Example 11: The coupling assembly (1) according to any one of the preceding Examples, wherein the first panel member (10) comprises a first panel member second side (104) which is opposite to the first panel member first side (102), wherein the first panel member second side (104) comprises at least one support portion (1042) configured to hold the first one (2) of the two battery modules.

Example 12: The coupling assembly (1) according to any one of the preceding Examples, wherein the second panel member (12) comprises a second panel member second side (124) which is opposite to the second panel member first side (122), wherein the second panel member second side (124) comprises at least one support portion (1242) configured to hold the second one (3) of the two battery modules.

Example 13: An energy storage system (4) comprising two battery modules (2, 3) and a coupling assembly (1) according to any one of the preceding Examples for coupling the two battery modules.

Example 14: A vehicle (5) comprising an energy storage system (4) according to Example 13.

Example 15: A method for coupling two battery modules (2, 3) by use of a coupling assembly (1) according to any one of Examples 1-12, the method comprising:
- coupling (S2) the first and second panel members (10, 12) to each other via the coupling interface (6) such that, when the first and second panel members (10, 12) are coupled, the first panel member first side (102) is facing the second panel member first side (122), wherein coupling the first and second panel members (10, 12) comprises coupling the first one of the upper and lower coupling interfaces (62) by moving the first and second panel members (10, 12) relative to one another in the vertical direction (V) until the first one of the upper and lower coupling interfaces (62) is coupled.

Example 16: The method according to Example 15, further comprising:
- applying (S 1) an adhesive to the first one of the upper and lower coupling interfaces (62) before coupling the first one of the upper and lower coupling interfaces (62).

Example 17: The method according to Example 15 or 16, and when the coupling assembly (1) comprises a fastener (7) according to any one of Examples 7-8, further comprising:
- inserting (S3) the fastener (7) through a respective opening (72) of the third and fourth connection members (642, 644).

Example 18: The method according to Example 16, wherein applying the adhesive comprises applying the adhesive into a reservoir of the first connection member and/or the second connection member.

Example 19: The method according to Example 17, further comprising inserting a plurality of fasteners through respective openings of the third and fourth connection members, wherein the respective openings are arranged along the longitudinal direction of the coupling assembly.

Example 20: The method according to Example 17, wherein inserting the fastener through a respective opening of the third and fourth connection members comprises inserting the fastener through the third and fourth connection members in a direction which substantially extends along the vertical direction.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A coupling assembly (1) for coupling two battery modules (2, 3) of an energy storage system (4), wherein each battery module is configured to comprise a plurality of electrochemical battery cells, and wherein the coupling assembly (1) extends in a longitudinal direction (L), a width direction (W) and a vertical direction (V), the coupling assembly (1) comprising:
- a first panel member (10) configured to be associated with a first one of the two battery modules (2), wherein the first panel member (10) comprises a first panel member first side (102) extending in the longitudinal direction (L) and the vertical direction (V),
- a second panel member (12) configured to be associated with a second one of the two battery modules (3), wherein the second panel member (12) comprises a second panel member first side (122) extending in the longitudinal direction (L) and the vertical direction (V),
- a coupling interface (6) for coupling the first and second panel members (10, 12) to each other,
wherein the first and second panel members (10, 12) are configured to be coupled to each other via the coupling interface (6) such that, when the first and second panel members (10, 12) are coupled, the first panel member first side (102) is facing the second panel member first side (122),
wherein the coupling interface (6) comprises an upper coupling interface (62) and a lower coupling interface (64), as seen in the vertical direction (V), wherein the upper and lower coupling interfaces (62, 64) are offset from each other in the vertical direction (V), and wherein a first one of the upper and lower coupling interfaces (62) is configured such that a relative movement of the first and second panel members (10, 12) in the vertical direction (V) is required to couple the first and second panel members (10, 12).

2. The coupling assembly (1) according to claim 1, wherein the first one of the upper and lower coupling interfaces (62) comprises a first connection member (622) attached to the first panel member (10) and a second connection member (624) attached to the second panel member (12), wherein the first connection member (622) and the second connection member (624) are configured to mechanically interconnect.

3. The coupling assembly (1) according to claim 2, wherein the first connection member (622) comprises a first wall segment (6222) extending in the longitudinal direction (L) and the vertical direction (V) and the second connection member (624) comprises a second wall segment (6242) extending in the longitudinal direction (L) and the vertical direction (V), wherein the first wall segment (6222) is configured to mesh with the second wall segment (6242) when the first and second panel members (10, 12) are coupled such that the first and second panel members (10, 12) are prevented from being disconnected from each other in the width direction (W).

4. The coupling assembly (1) according to claim 3, wherein the first connection member (622) comprises a plurality of respective first wall segments (6222) and the second connection member (624) comprises a plurality of respective second wall segments (6242).

5. The coupling assembly (1) according to claim 4, wherein the plurality of respective first wall segments (6222) are offset from each other in the width direction (W) and the plurality of respective second wall segments (6242) are offset from each other in the width direction (W).

6. The coupling assembly (1) according to any one of claims 2-5, wherein the first connection member (622) and/or the second connection member (624) comprises a reservoir (6244) for receiving an adhesive for bonding the first connection member (622) to the second connection member (624).

7. The coupling assembly (1) according to any one of the preceding claims, wherein a second one of the upper and lower coupling interfaces (64) comprises a third connection member (642) attached to the first panel member (10) and a fourth connection member (644) attached to the second panel member (12), wherein the third and fourth connection members (642, 644) are configured to be coupled to each other by use of a fastener (7), such as a rivet or a screw.

8. The coupling assembly (1) according to claim 7, wherein the third and fourth connection members (642, 644) comprise a respective opening (72) for receiving the fastener, wherein the openings are configured such that the fastener (7) is insertable through the third and fourth connection members (642, 644) in a direction which substantially extends along the vertical direction (V).

9. The coupling assembly (1) according to any one of the preceding claims, wherein at least one of the first and second panel members (10, 12) is an extruded profile with an extrusion direction corresponding to the longitudinal direction (L).

10. The coupling assembly (1) according to any one of the preceding claims, wherein the first one of the upper and lower coupling interfaces (62) is the upper coupling interface.

11. The coupling assembly (1) according to any one of the preceding claims, wherein the first panel member (10) comprises a first panel member second side (104) which is opposite to the first panel member first side (102), wherein the first panel member second side (104) comprises at least one support portion (1042) configured to hold the first one (2) of the two battery modules.

12. The coupling assembly (1) according to any one of the preceding claims, wherein the second panel member (12) comprises a second panel member second side (124) which is opposite to the second panel member first side (122), wherein the second panel member second side (124) comprises at least one support portion (1242) configured to hold the second one (3) of the two battery modules.

13. An energy storage system (4) comprising two battery modules (2, 3) and a coupling assembly (1) according to any one of the preceding claims for coupling the two battery modules.

14. A vehicle (5) comprising an energy storage system (4) according to claim 13.

15. A method for coupling two battery modules (2, 3) by use of a coupling assembly (1) according to any one of claims 1-12, the method comprising:
- coupling (S2) the first and second panel members (10, 12) to each other via the coupling interface (6) such that, when the first and second panel members (10, 12) are coupled, the first panel member first side (102) is facing the second panel member first side (122), wherein coupling the first and second panel members (10, 12) comprises coupling the first one of the upper and lower coupling interfaces (62) by moving the first and second panel members (10, 12) relative to one another in the vertical direction (V) until the first one of the upper and lower coupling interfaces (62) is coupled.
